# NEW EUROPEAN PATENT SPECIFICATION

(11) **EP 3 341 523 B2**
(45) Date of publication and mention of the opposition decision: **06.12.2023**
(45) Mention of the grant of the patent: 08.01.2020
(21) Application number: 16838645.6
(22) Date of filing: 23.08.2016
(51) Int. Cl.: D21D 1/26, D21C 9/00, D21D 1/06, D21D 1/20, D21H 11/18

(54) **METHOD FOR PRODUCING MICROFIBRILLATED CELLULOSE FIBER**
VERFAHREN ZUR HERSTELLUNG VON MIKROFIBRILLIERTER CELLULOSEFASER
PROCÉDÉ DE FIBRE DE CELLULOSE MICROFIBRILLÉE

(30) Priority: 27.08.2015 SE 1551119
(43) Date of publication of application: 04.07.2018
(73) Proprietor: Stora Enso Oyj, 00101 Helsinki (FI)
(72) Inventor: HEISKANEN, Isto, 55100 Imatra (FI); KASTINEN, Henri, 55100 Imatra (FI); AXRUP, Lars, 663 41 Hammarö (SE); PÖLLÄNEN, Saija, 55120 Imatra (FI); KORHONEN, Jani, 55100 Imatra (FI); SUHONEN, Petri, 55100 Imatra (FI); TIAINEN, Teemu, 55100 Imatra (FI); VÄKEVÄINEN, Matti, 55120 Imatra (FI)
(74) Representative: Steinrud, Henrik
(86) International application number: PCT/IB2016/055021
(87) International publication number: WO 2017/033125

(56) References cited:
- EP-A1- 1 538 257
- EP-A1- 1 538 257
- EP-A1- 2 236 664
- EP-A2- 2 669 427
- EP-A2- 2 669 427
- WO-A1-96/00616
- WO-A1-2011/004301
- WO-A1-2012/072874
- WO-A1-2012/072874
- WO-A1-2012/089930
- WO-A1-2012/101330
- WO-A1-2013/072559
- WO-A1-2013/188657
- WO-A1-2013/188657
- WO-A1-2014/031737
- WO-A1-2014/106684
- WO-A1-2014/106684
- WO-A1-2014/184438
- WO-A1-2014/184442
- WO-A2-2010/131016
- JP-A- 2000 250 174
- US-A- 5 695 136
- US-A- 5 704 559
- US-A1- 2005 194 477
- US-A1- 2006 192 040
- US-A1- 2008 054 107
- US-A1- 2008 057 307
- US-A1- 2011 278 385
- US-B2- 7 419 112
- US-B2- 7 934 672
- ANTKU J ET AL.: 'Optimizing refiner plate bar height will reduce energy consumption' PULP & PAPER March 1986, pages 95 - 97, XP009508999
- Antku J; Ludwig C J: "Optimizing refiner plate bar height will reduce energy consumption", Pulp & Paper, March 1986 (1986-03), pages 95-97,
- Parmenides Cuberos-Martinez, S. W. Park: "REVIEW OF PHYSICAL PRINCIPLES IN LOW CONSISTENCY REFINING", O PAPEL, vol. 73, no. 8, August 2012 (2012-08), pages 65-72,
- Freeness Conversion Table
- Jorma LUMIAINEN: "Refining of chemical pulp" In: "PAPERMAKING SCIENCE AND TECHNOLOGY, PAPERMAKING PART 1: STOCK PREPARATION AND WET END", 2000, Fapet Oy, Helsinki, Finland vol. 8, page 1-20, 39pp,
- Ali Elahimehr: "Low Consistency Refining of Mechanical Pulp: The Relationship Between Plate Pattern, Operational Variables and Pulp Properties", THESIS, 2014, pages ii-xviii, 1-102,
- Sinke Henshaw Osong: "Mechanical Pulp Based Nano-ligno-cellulose: Production, Characterization and their Effect on Paper Properties", Thesis, 2014, pages ii-xvii, 1-57,
- Declaration by Hakan Sjöström
- Appendix 1 to the declaration E29 by Hakan Sjöström
- Appendix 2 to the declaration E29 by Hakan Sjöström
- Appendix 3 to the declaration E29 by Hakan Sjöström
- Declaration by Herje Fasten
- Declaration by Johan Magnusson
- Joy, E., Rintamaki, J., Weckroth, R., & Tuomelai, P. (2004) Ultra-low intensity refining of short fibered pulps.
- MoRe Research report R191559
- Datasheet for Metso refiners, creation date 11.04.2007
- Sixta, Herbert, "Handbook of Pulp"WILEY-VCH Verlag GmbH & Co. KGaA, 2006
- Valmet - Wikipedia

## Description

The present invention relates to a method for producing microfibrillated cellulose fibres.

In the following, the concept "chemical pulp" will be frequently used in the application. Chemical pulp is a lignocellulosic fibrous material prepared by chemically separating cellulose fibres from a fibre-containing material. Chemical pulp is produced by combining fibre-containing material and chemicals in large vessels known as digesters where heat and the chemicals break down the lignin, which binds the cellulose fibres together, without seriously degrading of the cellulose fibres.

The concept "fibre-containing material" is later to be understood as a wide concept comprising wood chips, grass and other fibre-containing materials originating from the vegetable kingdom, which have been crushed into pieces of appropriate sizes so they can be fed into the device.

The concept "microfibrillated cellulose" (MFC) is also known as nanocellulose. It is a material typically made from wood cellulose fibres, both from hardwood or softwood fibres. It can also be made from microbial sources, agricultural fibres such as wheat straw pulp, bagasse, bamboo or other non-wood fibre sources. In microfibrillated cellulose the individual microfibrils have been partly or totally detached from each other. A microfibrillated cellulose fibre is normally very thin (∼20 nm) and the length is often between 100 nm to 10 µm. However, the microfibrils may also be longer, for example between 10-200 µm, but lengths even 2000 µm can be found due to wide length distribution. Microfibrils that are separated and located in a water phase of slurry are included in the definition MFC.

"Refining" of chemical pulp in a refiner is the mechanical treatment and modification of fibres so that they can be formed into paper or board of desired properties.

It is known to produce MFC with multiple passes of chemical pulp through a refiner, see for example WO2012089930A1 and US7381294B2. Every pass leads to an energy loss, so called no-load energy, measured so that energy needed when water runs through the refiner. This energy loss can be very high, typically about 20-40% of the total energy. The more passes the pulp runs through the refiner, the more difficult it will be to load the refiner (as pulp does not stay between the refiner blades), but the no-load energy stays the same, this leads to that more amount of the total energy is lost (typically turns into heat).

Thus, there is a strong need to reduce the amount of needed passes through the refiners in order to reduce the loss of energy. Moreover, there is a need to have more homogenous refining of high Schopper-Riegler (SR) chemical pulp.

A standard height of the refiner blades when refining fibres is in the range 6-10 mm. This is due to the runnability issues and that the pressure difference must be maintained. Wear of the refiner blades is another issue that is crucial so therefore, a certain height of the blades is needed.

The method according to the invention is characterized in that the method comprising the steps of:
- pre-treating of chemical pulp, such that, the pulp reaches a Schopper-Riegler (SR) value above 50, and
- refining the pulp, at a consistency of 3-6%, in a refiner with refiner blades, wherein the height of the refiner blades is in the range 2-3 mm.

Such low heights as 2-3 mm of refiner blades is normally not used due to the flow through the refiner is reduced and blocking of the blades will occur.

In accordance with the invention the pulp is highly refined and have a SR value above 50, preferably above 60. The blocking of the refiner blades is prevented due to the lower fibre length and reduced flocking and dewatering tendency of the pulp.

If using conventional refiner blades, with a longer height, for a pulp having a SR value above 50, it would not be possible to load the refiner. This is due to less flocking of the pulp and the pulp will not stay between the refiner blades and mechanical contact will occur if the refiner is loaded too much.

However, with the low height of the refiner blades, in accordance with the invention, it is possible to keep pulp between the refiner blades and thus increase the loading of the refiner. Thus, with only one refiner it is possible to put more energy into fibres, and reduce the amount refiners. Hence, instead of using 2-3 refiners, the invention makes it possible to only use one refiner.

When using only one refiner, the no load energy (i.e. energy taken by the refiner without the pulp, no load is measured by running refiner with water only) per produce ton of fibres is much less than when using several refiners.

Normally one must refine the pulp several times (with the same blades) or in several steps (different type of blades) to produce MFC. This require high energy, high investments, and result in an uneven MFC quality.

However, by starting the refining from a pulp with a high SR value as 50, preferably 60, the use of the specific blade will considerably enhance the pulp quality.

### Example

In one embodiment of the invention, the method comprising the steps of:
Pre-treating of chemical pulp, such that, the pulp reaches a Schopper-Riegler (SR) value above 50. This may be made by pre-refining of the chemical pulp.

The pulp is refined, at a consistency of 3-6%, in a refiner with refiner blades, wherein the height of the refiner blades is in the range 2-3 mm.

The cutting edge length (CEL) of the refiner during refining is preferably higher than 70 km/rev.

The surface edge load (SEL) during refining is preferably lower than 0.5 and more preferred lower than 0.3.

The refining is performed in an alkaline environment where the pH is higher than 8, preferably higher than 9. The alkaline environment and the short refiner blades facilitate the refined fibres to slip through the refiner.

The temperature during refining is higher than 40°C, preferably higher than 50°C. Conventionally, it is difficult to keep these high temperatures, but thanks to the low height of the refiner blades this matter is facilitated. The low height also gives a more even temperature during refining.

The rotation speed of the refiner blades during rotating is about 1000-1600 rpm.

The refiner is preferably a conical refiner.

The invention (method) has several benefits in comparison to prior art, such as:
- Require less steps of refining.
- Less fractions of unrefined fibres.
- Require less investment costs (don't require different blades).
- Possibility to have a higher edge load.

In the foregoing, the invention has been described on the basis of some embodiments. It is appreciated, however, that other embodiments and variants are possible within the scope of the following claims.

## Claims

1. Method for producing microfibrillated cellulose (MFC), **characterized in that** the method comprising the steps of:
- pre-treating of chemical pulp, such that, the pulp reaches a Schopper-Riegler (SR) value above 50, and
- refining the pulp, at a consistency of 3-6%, in a refiner with refiner blades, wherein the height of the refiner blades is in the range 2-3 mm.

2. Method according to claim 1, **characterized in that** the refining step further comprises that the cutting edge length (CEL) during refining is higher than 70 km/rev.

3. Method according to any of claims 1-2, **characterized in that** the surface edge load (SEL) during refining is lower than 0.5, preferably lower than 0.3.

4. Method according to any of claims 1-3, **characterized in that** the pH during refining is higher than 8, preferably higher than 9.

5. Method according to any of claims 1-4, **characterized in that** the temperature during the refining step is higher than 40°C, preferably higher than 50°C.

6. Method according to any of claims 1-5, **characterized in that** the refining step further comprises that the refiner blades rotating with a rotation speed of 1000-1600 rpm.

7. Method according to any of claims 1-6, wherein the pre-treating step comprising a pre-refining of the chemical pulp.

## Patentansprüche

1. Verfahren zur Herstellung von mikrofibrillierter Cellulose (MFC), **dadurch gekennzeichnet, dass** das Verfahren die folgenden Schritte umfasst:
- Vorbehandeln von Zellstoff, sodass der Zellstoff einen Schopper-Riegler (SR) -Wert von mehr als 50 erreicht, und
- Verfeinerung des Zellstoffs, bei einer Stoffdichte von 3 - 6 %, in einem Refiner mit Refinerklingen, wobei die Höhe der Refinerklingen im Bereich von 2 - 3 mm liegt.

2. Verfahren nach Anspruch 1, **dadurch gekennzeichnet, dass** der Verfeinerungsschritt ferner umfasst, dass die Schneidkantenlänge (SKL) während der Verfeinerung mehr als 70 km / U beträgt.

3. Verfahren nach einem der Ansprüche 1 - 2, **dadurch gekennzeichnet, dass** die Oberflächenkantenbelastung (OKL) während der Verfeinerung weniger als 0,5, vorzugsweise weniger als 0,3, beträgt.

4. Verfahren nach einem der Ansprüche 1 - 3, **dadurch gekennzeichnet, dass** der pH-Wert während der Verfeinerung höher als 8, vorzugsweise höher als 9, ist.

5. Verfahren nach einem der Ansprüche 1 - 4, **dadurch gekennzeichnet, dass** die Temperatur während des Verfeinerungsschritts höher als 40 °C, vorzugsweise höher als 50 °C ist.

6. Verfahren nach einem der Ansprüche 1 - 5, **dadurch gekennzeichnet, dass** der Verfeinerungsschritt ferner umfasst, dass sich die Refinerklingen mit einer Drehgeschwindigkeit von 1000 - 1600 U / min drehen.

7. Verfahren nach einem der Ansprüche 1 - 6, wobei der Vorbehandlungsschritt ein Vorverfeinern des Zellstoffs umfasst.

## Revendications

1. Procédé de production de cellulose microfibrillée (MFC), **caractérisé en ce que** le procédé comprend les étapes de :
- prétraitement de la pulpe chimique, de sorte que la pulpe atteigne une valeur de Schopper-Riegler (SR) supérieure à 50, et
- raffinage de la pulpe, à une consistance de 3-6 %, dans un raffineur avec des lames de raffineurs, dans lequel la hauteur des lames de raffineurs se situe dans la plage de 2-3 mm.

2. Procédé selon la revendication 1, **caractérisé en ce que** l'étape de raffinage comprend en outre que la longueur de bord de coupe (CEL) pendant le raffinage est supérieure à 70 km/tr.

3. Procédé selon l'une quelconque des revendications 1-2, **caractérisé en ce que** la charge de bord de surface (SEL) pendant le raffinage est inférieure à 0,5, et de préférence à 0,3.

4. Procédé selon l'une quelconque des revendications 1-3, **caractérisé en ce que** le pH pendant le raffinage est supérieur à 8, et de préférence à 9.

5. Procédé selon l'une quelconque des revendications 1-4, **caractérisé en ce que** la température pendant l'étape de raffinage est supérieure à 40 °C, et de préférence à 50 °C.

6. Procédé selon l'une quelconque des revendications 1-5, **caractérisé en ce que** l'étape de raffinage comprend en outre que les lames de raffineurs tournent avec une vitesse de rotation de 1 000-1 600 tr/min.

7. Procédé selon l'une quelconque des revendications 1-6, dans lequel l'étape de prétraitement comprenant un pré-raffinage de la pulpe chimique.
